# EUROPÄISCHE PATENTSCHRIFT

(11) **EP 2 501 921 B1**
(45) Veröffentlichungstag und Bekanntmachung des Hinweises auf die Patenterteilung: **28.08.2013**
(21) Anmeldenummer: 10784725.3
(22) Anmeldetag: 02.11.2010
(51) Int. Cl.: F02M 25/07

(54) **STELLVORRICHTUNG ZUR UMWANDLUNG EINER ROTATORISCHEN BEWEGUNG IN EINE LINEARE BEWEGUNG**
POSITIONING DEVICE FOR CONVERTING A ROTARY MOTION INTO A LINEAR MOTION
DISPOSITIF DE RÉGLAGE PERMETTANT DE CONVERTIR UN MOUVEMENT ROTATIF EN UN MOUVEMENT LINÉAIRE

(30) Priorität: 19.11.2009 DE 102009053428
(43) Veröffentlichungstag der Anmeldung: 26.09.2012
(73) Patentinhaber: Pierburg GmbH, 41460 Neuss (DE)
(72) Erfinder: Herrn Dr. TÖNNESMANN, Andres, 52066 Aachen (DE); NOWAK, Martin, 51379 Leverkusen (DE); KÖSTER, Andreas, 45149 Essen (DE)
(74) Vertreter: Patentanwälte ter Smitten Eberlein Rütten Partnerschaftsgesellschaft
(86) Internationale Anmeldenummer: PCT/EP2010/066613
(87) Internationale Veröffentlichungsnummer: WO 2011/061051

(56) Entgegenhaltungen:
- EP-A1- 1 319 879
- EP-A1- 1 526 272
- EP-A2- 1 632 674
- EP-A2- 1 826 391
- DE-A1- 10 221 711
- US-A1- 2006 185 464

## Beschreibung

Die Erfindung betrifft eine Stellvorrichtung zur Umwandlung einer rotatorischen Bewegung in eine lineare Bewegung mit einer Antriebseinheit, die ein Drehmoment erzeugt, einer Antriebswelle, auf der ein Exzenter angeordnet ist, einer Ausgangswelle, die am Exzenter angeordnet ist und in einer Kulisse eines Kopplungselementes bewegbar ist und einem Verstellelement, welches mit dem Kopplungselement verbunden und derart gelagert ist, dass das Verstellelement mit dem Kopplungselement linear bewegbar ist, wobei die Kulisse eine Führungsbahn beschreibt, die mit dem Exzenter zusammenwirkt.

Derartige Stellvorrichtungen werden insbesondere zum Antrieb von Abgasrückführventilen verwendet, können aber beispielsweise auch für Waste-Gate-Ventile, Registerklappen oder als VTG-Steller verwendet werden.

Es sind verschiedene Ventile mit derartigen oder ähnlichen Stellvorrichtungen bekannt, wobei ein Elektromotor als Antriebseinheit dient, dessen Antriebswelle mit unterschiedlich gearteten Exzentern gekoppelt ist, deren Bewegung über unterschiedliche Kopplungsmechanismen in eine lineare Bewegung einer als Verstellelement dienenden Ventilstange umgewandelt wird.

So wird in der EP 1 319 879 A1 ein von einem Elektromotor angetriebenes Ventil offenbart, bei dem exzentrisch zu einer Antriebswelle eine Ausgangswelle angeordnet ist, auf der eine Rolle drehbar angeordnet ist, die in einer Kulisse eines Kopplungselementes läuft. Die Rolle wird in eine Richtung mit einer Federkraft beaufschlagt. Die Abrollbahn der Kulisse des Kopplungselementes für die Rolle steht dabei senkrecht zur Bewegungsrichtung des Kopplungselementes. Die Ausprägung des Kraft-Hub-Verlaufs dieses Elementes ist somit festgelegt.

Auch die DE 102 21 711 A1 beschreibt ein ähnliches Ventil, wobei zwei Exzenter miteinander gekoppelt sind. Auch bei dieser Ausführung ist die Kulisse, die als Abrollbahn für ein Kugellager dient, als Gerade ausgeführt, die sich senkrecht zur Bewegungsrichtung erstreckt. Auch hier ist es nicht möglich, spezielle geforderte Kraft-Weg-Verläufe bei der Betätigung des Ventils mit ausreichender Variabilität zu gewährleisten.

Des Weiteren ist aus der EP 1 378 655 A2 ein Elektromotor getriebenes Ventil bekannt, bei dem ein Rotationskörper zwei gegenüberliegende Kulissen aufweist, in denen eine Stange geführt ist, die wiederum mit einer Ventilstange verbunden ist. Die Kulisse kann dabei als definierte Kurve ausgeführt sein. Mit dieser Ausführung kann ein definierter Kraftaufwand zur Verstellung des Ventils in direkter Abhängigkeit vom Hub eingestellt werden. Der hier benötigte Bauraum ist ebenso wie die Anzahl der zu verwendenden Bauteile relativ hoch.

Es stellt sich daher die Aufgabe, eine Stellvorrichtung zu schaffen, mit welcher ein Kraft-Hub-Verlauf oder Drehwinkel-Hubverlauf für bestimmte Anwendungsfälle wählbar ist und welche gleichzeitig einen möglichst geringen Platzbedarf hat.

Diese Aufgabe wird dadurch gelöst, dass die Führungsbahn einen Winkel zu einer zur Bewegungsrichtung des Verstellelementes senkrechten Ebene einschließt. Durch das bislang nicht bekannte Zusammenspiel aus einem exzentrischen Antrieb und einer Kulissenkurvenbahn können so erstmalig, in weit größerem Umfang als bislang, Kraft-Hub-Verläufe und Drehwinkel-Hub-Verläufe eingestellt werden, die eine Anpassung einer derartigen Stellvorrichtung an eine Vielzahl unterschiedlicher Anwendungen ermöglichen. Der Bauraum ist dennoch nicht größer als bei anderen bekannten Exzenterantrieben. Bei gleichem Gesamthub kann die Exzenterlänge sogar kleiner gewählt werden.

In einer bevorzugten Ausführung beschreibt die Kulisse eine Kurve mit sich ändernder Steigung. So entstehen zusätzliche Möglichkeiten zur Anpassung von Kraft-Hubverläufen an bestimmte Anwendungsfälle.

Vorzugsweise ist auf der Ausgangswelle eine Rolle oder ein Lager angeordnet, welches in der Kulisse läuft, so dass die Reibung zwischen der Kulisse beziehungsweise deren Abrollbahn und der Außenbahn des abrollenden Körpers, hier dem Lager oder der Rolle, minimiert wird.

Besonders vorteilhaft ist es, wenn als Ausgangsposition der Drehung zur Betätigung des Verstellelementes eine Position dient, die in Drehrichtung vor einem bezüglich der axialen Bewegung der Ausgangswelle vorhandenen Umkehrpunkt angeordnet ist, der während der Drehbewegung in die Endposition durchfahren wird. So wird es möglich, kleine Hübe eines Ventils bei relativ großen Stellwinkeln zu verwirklichen, was eine genaue Dosierung im empfindlichen Stellbereich kurz nach dem Verlassen der Schließposition ermöglicht.

In einer hierzu weiterführenden Ausführung weist ein erster durch die Ausgangswelle zu durchfahrender Bereich der Kulisse in Bezug auf die zur Bewegungsrichtung des Verstellelementes senkrechte Ebene eine Steigung auf und ein zweiter zu durchfahrender Bereich ein Gefälle auf. Durch eine derartige Ausführung kann eine zusätzliche Anpassung bezüglich der Beziehung zwischen Drehwinkel und daraus folgendem Hub ebenso erfolgen, wie eine Anpassung an eine gewünschte Kraft-Hub-Linie, die beispielsweise zu einem weitestgehend konstanten Kraftaufwand bei der Verstellung im ersten Bereich führt. Gleichzeitig ist durch eine derartige Anpassung eine zusätzliche Untersetzung außerhalb eines vorgeschalteten Getriebes möglich.

In einer wiederum weiterführenden Ausführung der Erfindung ist die Steigung im ersten zu durchfahrenden Bereich steiler als die Steigung einer Abrolllinie der Ausgangswelle beim Durchfahren des Bereiches von einer ersten Endposition bis zum bezüglich der axialen Bewegung der Ausgangswelle oberen Umkehrpunkt. So wird sichergestellt, dass ein Hub in diesem Stellbereich erfolgt.

Die Hubkraft kann so in einem nennenswerten Bereich um mindestens einen der beiden Endanschläge konstant gehalten werden. Die verfügbare Stellkraft wird hierdurch unabhängig von Toleranzen, welche beispielsweise durch thermische Dehnung der Ventilstange auftreten könnten. Ein solcher nahezu konstanter Kraftverlauf im Bereich der geschlossenen Stellung über etwa 15-25% des Vollhubs hinweg wird insbesondere bei einer Verwendung der Stellvorrichtung als Steller eines Waste-Gate Ventils wegen der herrschenden Gasdruckkräfte an der Klappe gefordert.

Es wird somit eine Stellvorrichtung geschaffen, deren Kopplungsvorrichtung in Zusammenhang mit dem Exzenter zu der Möglichkeit einer wählbaren Kraft-Hubeinstellung führt, in dem der gewählte Drehwinkelbereich zur Kulisse entsprechend abgestimmt wird. Auch eine Einstellung zwischen Drehwinkel und Hub zur besseren Dosierung ist mit der erfindungsgemäßen Stellvorrichtung einstellbar. Gleichzeitig wird der benötigte Bauraum sehr gering gehalten.

Ein Ausführungsbeispiel einer erfindungsgemäßen Stellvorrichtung ist in den Figuren dargestellt und wird nachfolgend beschrieben.

Die Figur 1 zeigt eine perspektivische Ansicht der Kopplungsvorrichtung und des Exzenters einer Stellvorrichtung nach dem Stand der Technik.

Die Figuren 2a) und b) zeigen eine schematische Darstellung der Kopplungsvorrichtung und des Exzenters einer erfindungsgemäßen Stellvorrichtung in den jeweiligen Endstellungen.

Die Figur 3 zeigt die Funktion des Linearhubs über den Drehwinkel für eine Stellvorrichtung mit einer Kopplungsvorrichtung gemäß Figur 2 in graphischer Darstellung.

Die Figur 4 zeigt die Funktion der Kraft über den Hub für eine Stellvorrichtung mit einer Kopplungsvorrichtung gemäß Figur 2 in graphischer Darstellung im Vergleich zur entsprechenden Funktion einer ebenen Kulisse.

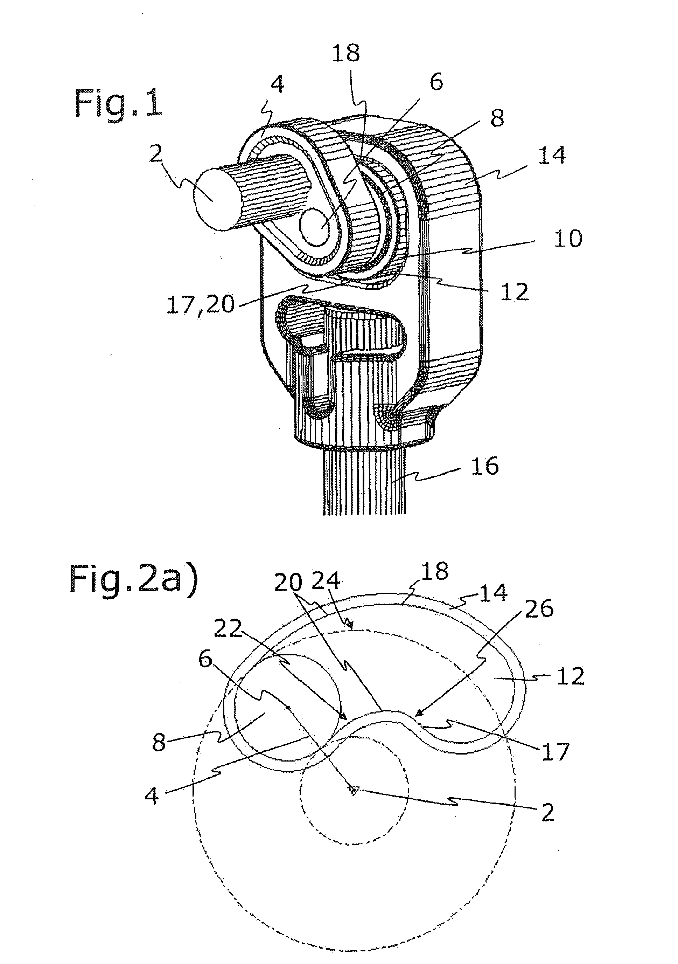

In Figur 1 ist ein Ausschnitt einer Stellvorrichtung dargestellt, die dem Stand der Technik entspricht. Dabei betrifft der dargestellte Bereich den erfindungswesentlichen Teil der Stellvorrichtung.

Die Stellvorrichtung besteht in bekannter Weise aus einer nicht dargestellten rotatorisch wirkenden Antriebseinheit, wie beispielsweise einem Elektromotor, über die eine Antriebswelle 2 angetrieben wird. Auf dem zur Antriebseinheit entgegengesetzten Ende der Antriebswelle 2 ist ein Exzenter 4 drehfest angeordnet. An einem zur Antriebswelle 2 entfernten Ende des Exzenters 4 ist eine Ausgangswelle 6 angeordnet, die parallel zur Antriebswelle 2 verläuft, so dass sich die Ausgangswelle 6 bei Drehung der Antriebswelle 2 kreisförmig um die Antriebswelle 2 dreht.

Auf dem zum Exzenter 4 entgegengesetzten Ende der Ausgangswelle 6 ist ein Kugellager 8 angeordnet, dessen Innenring auf der Ausgangswelle 6 befestigt ist. Ein Außenring 10 des Kugellagers 8 läuft in einer Kulisse 12 eines Kopplungselementes 14, an dem ein Verstellelement 16 in Form einer Ventilstange eines nicht näher dargestellten Hubventils befestigt ist. Die Ventilstange ist in bekannter Weise in einem Gehäuse gelagert, so dass diese mit dem Kopplungselement lediglich eine lineare Hubbewegung ausführen kann. Die Kulisse 12 wird bei der dargestellten Kopplungsvorrichtung 14 durch eine Öffnung gebildet, deren Höhe durch zwei Wände 17, 18 begrenzt wird, deren Abstand dem Umfang des Kugellagers 8 im Wesentlichen entspricht und deren Breite durch die Länge des Exzenters 4 sowie dessen Verstellwinkel bestimmt wird. Die begrenzenden Wände 17, 18, weiche als Führungsbahn 20 des Kugellagers 8 dienen, sind als gerade Ebenen ausgeführt, welche sich senkrecht zur Bewegungsrichtung der Ventilstange 8 bei Betätigung der Antriebseinheit erstrecken.

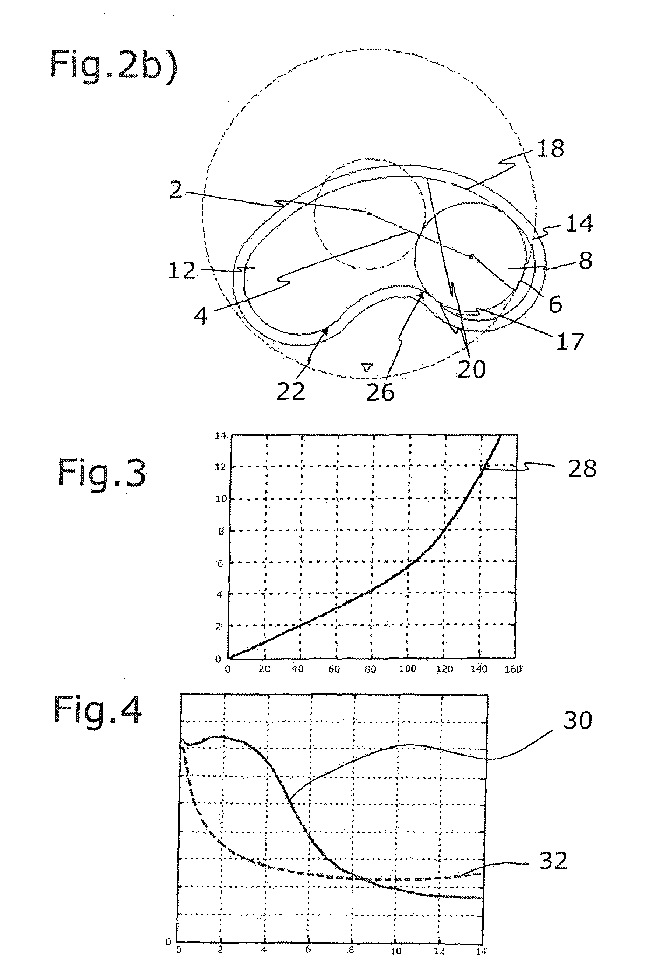

Im Vergleich hierzu ist die in Figur 2 dargestellte erfindungsgemäße Kulisse 12 beziehungsweise die resultierende Führungsbahn 20 als Kurve ausgeführt. Unter Kurve im Sinne dieser Anmeldung wird also eine Linie verstanden, welche nicht zwangsläufig vollständiggeradlinig verläuft.

Diese Kurve ist so ausgeführt, dass sich eine derartige Stellvorrichtung beispielsweise zum Antrieb eines Waste-Gate-Ventils eignet. Bei einem solchen Ventil ist es erwünscht, dass die Ventilkraft beim Verlassen der Schließposition des Ventils über einen bestimmten Öffnungsbereich etwa konstant bleibt.

In der Figur 2 ist der Exzenter 4 lediglich als Verbindungslinie zwischen dem Drehpunkt des Exzenters 4 und dem Drehpunkt 6 des Lagers 8 oder einer Rolle angedeutet. Die Figur 2a) zeigt das Kopplungselement 14 in einer Position, in der das Verstellelement 16 sich in einer ersten Endposition befindet, die beispielsweise durch entsprechend ausgebildete Anschläge für vorgeschaltete Zahnräder oder andere bewegte Teile festgelegt ist. Das Lager 8 befindet sich in dieser Position am linken Ende der Kulisse 12 unterhalb eines bezüglich der axialen Bewegung des Drehpunktes 6 oberen Umkehrpunktes 24 des Exzenters 4.

Wird im Folgenden die Antriebseinheit im Uhrzeigersinn betätigt und somit der Exzenter im Uhrzeigersinn gedreht, wird das Lager 8 in gleichbleibendem Abstand um die Drehachse der Antriebswelle 2 gedreht und rollt entlang der Führungsbahn 20 der Kulisse 12, welche lediglich in vertikaler Richtung bewegbar ist. Ein erster durch das Abrollen des Lagers 8 durchfahrener Bereich der Kulisse 12 weist in Bezug auf eine zur Betätigungsrichtung des Verstellelementes senkrecht stehende Ebene eine Steigung 22 auf, welche steiler ausgebildet ist als der jeweilige durch das Lager überfahrene Kreisbogen. Hierdurch entsteht trotz der Aufwärtsbewegung des Lagers eine Abwärtsbewegung der Kulisse 12 und somit des Kopplungselementes 14 und des Verstellelementes 16. Der nach dem Durchfahren des oberen Umkehrpunktes 24 folgende Bereich der Führungsbahn weist zunächst noch eine geringere Steigung 22 auf, welche schließlich in einem zweiten Bereich in ein Gefälle 26 übergeht. Die nach dem Durchfahren beider Bereiche 22, 26 erreichte zweite Endposition ist in der Figur 2b) dargestellt.

Der aus dieser Bewegung folgende Hub ist in Figur 3 über dem Drehwinkel aufgetragen. Es ist zu erkennen, dass der entstehende Graph 28 im ersten Bereich relativ flach ist und bei größerem Hub deutlich steiler ist. Eine solche Kurve ist vorteilhaft, da eine Volumenstromregelung hierdurch deutlich erleichtert wird, da im Bereich kurz nach dem Öffnen eine geringe Hubveränderung eine relativ große Änderung des Volumenstroms zur Folge hat, während bei relativ großem Hub eine Änderung des Hubs nur relativ kleine Änderungen des Volumenstroms zur Folge hat.

In Figur 4 wird mittels des Graphen 30 der Kraft-Hubverlauf einer Stellvorrichtung entsprechend der Figur 2 dargestellt, während der gestrichelte Graph 32 den Kraft-Hubverlauf einer Stellvorrichtung mit zur Bewegungsrichtung des Verstellelementes senkrechten Führungsbahn gemäß Figur 1 darstellt. Es wird deutlich, dass in einem Bereich von bis zu etwa 4 mm Hub, was etwa 25% des Gesamthubweges entspricht, die aufzuwendende Ventilkraft einer Stellvorrichtung entsprechend der Figur 2 im Gegensatz zur aufzubringenden Ventilkraft für eine Stellvorrichtung entsprechend der Figur 1 sich nur geringfügig mit dem Hub ändert.

Neben diesem Vorteil der Einstellung eines gewünschten Kraftverlaufes können auch zusätzliche Unter- oder Übersetzungen bezogen auf den gesamten Stellbereich verwirklicht werden, indem mittels der Kulisse der Verstellweg des Verstellelementes im Vergleich zum Hubweg der Ausgangswelle vergrößert oder verkleinert wird.

So kann zusätzlich Bauraum eingespart werden. Es wird deutlich, dass mit der erfindungsgemäßen Stellvorrichtung sowohl Kraft-Hub-Verläufe als auch Drehwinkel-Hubverläufe je nach Anwendung eingestellt werden können und somit ein derartiger Steller für viele verschiedene Anwendungen genutzt werden kann, ohne dass dies prinzipiell eine Vergrößerung des benötigten Bauraums im Vergleich zu bekannten Stellvorrichtungen zur Folge hätte.

Es sollte deutlich sein, dass der Schutzbereich der Ansprüche nicht auf das beschriebene Ausführungsbeispiel beschränkt ist, sondern je nach Anwendung unterschiedliche Formen der Führungsbahn gewünscht sein können, um zum vorteilhaften Kraft-Hub-Verlauf zu gelangen. Auch kann eine solche Stellvorrichtung selbstverständlich in entgegengesetzter Richtung wirkend ausgebildet werden.

## Patentansprüche

1. Stellvorrichtung zur Umwandlung einer rotatorischen Bewegung in eine lineare Bewegung mit
einer Antriebseinheit, die ein Drehmoment erzeugt,
einer Antriebswelle (2), auf der ein Exzenter (4) angeordnet ist, einer Ausgangswelle (6), die am Exzenter (4) angeordnet ist und in einer Kulisse (12) eines Kopplungselementes (14) bewegbar ist und einem Verstellelement (16), welches mit dem Kopplungselement (14) verbunden und derart gelagert ist, dass das Verstellelement (16) mit dem Kopplungselement (14) linear bewegbar ist,
wobei die Kulisse (12) eine Führungsbahn (20) beschreibt, die mit dem Exzenter (4) zusammenwirkt,
**dadurch gekennzeichnet, dass**
die Führungsbahn (20) einen Winkel zu einer zur Bewegungsrichtung des Verstellelementes (16) senkrechten Ebene einschließt.

2. Stellvorrichtung zur Umwandlung einer rotatorischen Bewegung in eine lineare Bewegung nach Anspruch 1,
**dadurch gekennzeichnet, dass**
die Führungsbahn (20) eine Kurve mit sich ändernder Steigung beschreibt.

3. Stellvorrichtung zur Umwandlung einer rotatorischen Bewegung in eine lineare Bewegung nach einem der Ansprüche 1 oder 2, **dadurch gekennzeichnet, dass**
auf der Ausgangswelle (6) eine Rolle oder ein Lager (8) angeordnet ist, welches in der Kulisse (12) läuft.

4. Stellvorrichtung zur Umwandlung einer rotatorischen Bewegung in eine lineare Bewegung nach einem der vorhergehenden Ansprüche, **dadurch gekennzeichnet, dass**
als Ausgangsposition der Drehung zur Betätigung des Verstellelementes (16) eine Position dient, die in Drehrichtung vor einem bezüglich der axialen Bewegung der Ausgangswelle (6) vorhandenen Umkehrpunkt (24) angeordnet ist, der während der Drehbewegung in die Endposition durchfahren wird.

5. Stellvorrichtung zur Umwandlung einer rotatorischen Bewegung in eine lineare Bewegung nach Anspruch 4,
**dadurch gekennzeichnet, dass**
ein erster durch die Ausgangswelle (6) zu durchfahrender Bereich der Kulisse (12) in Bezug auf die zur Bewegungsrichtung des Verstellelementes (16) senkrechte Ebene eine Steigung (22) aufweist und ein zweiter zu durchfahrender Bereich ein Gefälle (26) aufweist.

6. Stellvorrichtung zur Umwandlung einer rotatorischen Bewegung in eine lineare Bewegung nach Anspruch 5,
**dadurch gekennzeichnet, dass**
die Steigung (22) im ersten zu durchfahrenden Bereich steiler ist als die Steigung des Kreisbogens der Ausgangswelle (6) beim Durchfahren des Bereiches von einer ersten Endposition bis zum bezüglich der axialen Bewegung oberen Umkehrpunkt (24).

## Claims

1. Positioning device for converting a rotary motion into a linear motion, comprising
a drive unit generating a torque,
an input shaft (2) on which an eccentric (4) is arranged,
an output shaft (6) arranged at the eccentric (4) and movable in a slotted link guide (12) of a coupling element (14) and
an adjustment element (16) connected with the coupling element (14) and supported such that the adjustment element (16) is linearly movable together with the coupling element (14),
wherein the slotted link guide (12) describes a guideway (20) cooperating with the eccentric (4),
**characterized in that**
the guideway (20) includes an angle with a plane vertical to the direction of movement of the adjustment element (16).

2. Positioning device for converting a rotary motion into a linear motion as defined in claim 1, **characterized in that** the guideway (20) describes a curve with a changing slope.

3. Positioning device for converting a rotary motion into a linear motion as defined in one of claims 1 or 2, **characterized in that** a roller or a bearing (8) is arranged on the output shaft (6), which moves in the slotted link guide (12).

4. Positioning device for converting a rotary motion into a linear motion as defined in of one of the preceding claims, **characterized in that**, as the initial position of the rotation for the actuation of the adjustment element (16), a position is used that, seen in the direction of rotation, is situated before a reversal point (24) which exists with respect to the axial movement of the output shaft (6) and is passed during the rotational movement to the end position.

5. Positioning device for converting a rotary motion into a linear motion as defined in claim 4, **characterized in that** a first portion of the slotted link guide (12) to be traversed by the output shaft (6) has an upward slope (22) with respect to a plane vertical to the direction of movement of the adjustment element (16), and a second portion to be traversed has a downward slope (26).

6. Positioning device for converting a rotary motion into a linear motion as defined in claim 5, **characterized in that** the upward slope (22) in the first portion to traverse is steeper than the slope of the circular arc of the output shaft (6) while traversing the portion from a first end position to the upper reversal point (24), seen with respect to the axial movement.

## Revendications

1. Dispositif de réglage permettant de convertir un mouvement rotatif en un mouvement linéaire, comprenant
une unité d'entrainement générant un couple,
un arbre d'entrainement (2) sur lequel est disposé un excentrique (4),
un arbre de sortie (6) disposé audit excentrique (4) et déplaçable dans une coulisse (12) d'un élément de couplage (14) et
un élément de réglage (16) lié audit élément de couplage (14) et supporté de manière que ledit élément de réglage (16) peut être déplacé linéairement avec ledit élément de couplage (14),
ladite coulisse (12) décrivant un chemin de guidage (20) coopérant avec ledit excentrique (4),
**caractérisé en ce que**
le chemin de guidage (20) forme un angle avec un plan perpendiculaire à la direction de mouvement dudit élément de réglage (16).

2. Dispositif de réglage permettant de convertir un mouvement rotatif en un mouvement linéaire selon la revendication 1, **caractérisé en ce que** ledit chemin de guidage (20) décrit une courbe ayant une pente qui se change.

3. Dispositif de réglage permettant de convertir un mouvement rotatif en un mouvement linéaire selon les revendications 1 ou 2, **caractérisé en ce qu'**un rouleau ou un palier (8) se déplaçant dans la coulisse (12) est disposé sur ledit arbre de sortie (6).

4. Dispositif de réglage permettant de convertir un mouvement rotatif en un mouvement linéaire selon l'une quelconque des revendications précédentes, **caractérisé en ce que** l'on utilise comme position de départ de la rotation pour l'actionnement dudit élément de réglage (16), une position située, vu dans la direction de rotation, avant un point de retour (24) existant pour le déplacement axial de l'arbre de sortie (6), lequel point est passé lors du déplacement en rotation dans la position d'extrémité.

5. Dispositif de réglage permettant de convertir un mouvement rotatif en un mouvement linéaire selon la revendication 4, **caractérisé en ce qu'**une première section de la coulisse (12) à traverser par ledit présente une pente ascendante (22) par rapport au plan perpendiculaire à la direction de mouvement dudit élément de réglage (16), et qu'une deuxième section à traverser présente une pente descendante (26).

6. Dispositif de réglage permettant de convertir un mouvement rotatif en un mouvement linéaire selon la revendication 5, **caractérisé en ce que** ladite pente (22) dans ladite première section à traverser est plus forte que la pente de l'arc de cercle dudit arbre de sortie (6) lors de la traversée de la section à partir d'une première position d'extrémité jusqu'au point de retour (24), qui es le point de retour haut par rapport au déplacement axial.
